**Europäisches Patentamt**

(19) **European Patent Office**

**Office européen des brevets**

(11) Veröffentlichungsnummer: **0 093 385**
**B1**

(12) **EUROPÄISCHE PATENTSCHRIFT**

(45) Veröffentlichungstag der Patentschrift:
**29.10.86**

(21) Anmeldenummer: **83104095.1**

(22) Anmeldetag: **27.04.83**

(51) Int. Cl.⁴: **B 29 C 67/18**, B 32 B 31/00

(54) Einrichtung zum Kaschieren von Bögen mit Kunststoff-Folie.

(30) Priorität: **06.05.82 DE 3216970**

(43) Veröffentlichungstag der Anmeldung:
**09.11.83 Patentblatt 83/45**

(45) Bekanntmachung des Hinweises auf die Patenterteilung:
**29.10.86 Patentblatt 86/44**

(84) Benannte Vertragsstaaten:
**CH DE FR GB IT LI**

(56) Entgegenhaltungen:
**DE - A - 2 410 145**
**DE - B - 1 238 192**
**DE - B - 1 652 289**
**GB - A - 1 161 628**
**US - A - 3 169 432**
**US - A - 3 798 107**
**US - A - 4 025 380**
**US - A - 4 214 936**

(73) Patentinhaber: **Renz, Peter, Unterm Stein 9,**
**D-7072 Heubach-Lautern (DE)**

(72) Erfinder: **Renz, Peter, Unterm Stein 9,**
**D-7072 Heubach-Lautern (DE)**

(74) Vertreter: **Schroeter, Helmut et al, Bocksgasse 49,**
**D-7070 Schwäbisch Gmünd (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine Einrichtung zum Kaschieren von Bögen aus Papier, Karton oder Pappe mit Kunststoff-Folie.

Aus der US-A-3 789 107 ist eine Einrichtung dieser Art mit den im Oberbegriff von Anspruch 1 genannten Merkmalen bekannt.

Zum Kaschieren der Bögen werden im allgemeinen klar durchsichtige Folien verwendet, die entweder selbstklebend sind oder thermoplastisch und unter Wärmeeinwirkung aufgebracht werden. Zum Aufbringen dient ein Walzenpaar, das Folien von Vorratsrollen abzieht und auf die zwischen dem Walzenpaar hindurchgeführten Bögen zum Kaschieren aufbringt.

Derartigen kontinuierlich arbeitenden Kaschiervorrichtungen werden die Bögen einzeln zugeführt. Nach dem Kaschieren verlässt die Kaschiervorrichtung ein fortlaufendes Folienband, in das die Bögen unter gegenseitigen Abständen eingeschlossen sind. Es ist dann erforderlich, die Bögen auszuschneiden, insbesondere längs der Bogenränder oder auch unter einigem Abstand von den Bogenrändern. Es bereitet keine Probleme, der kontinuierlich arbeitenden Kaschiervorrichtung kontinuierlich arbeitende Längsschneider nachzuschalten. Problematisch ist jedoch das Querschneiden, d.h. schneiden quer zur Förderrichtung, da dies nur bei stillstehendem Folienband erfolgen kann.

Auch nach der vorliegenden Erfindung werden einer Kaschiervorrichtung ein Bogenanleger vorgeschaltet und ein Querschneider nachgeschaltet, wobei die Arbeitsrhythmen des Bogenanlegers und des Querschneiders automatisch so gesteuert werden, dass sie in Einklang stehen mit dem kontinuierlichen Vorschub der Kaschiervorrichtung.

Nach der Erfindung gemäss Anspruch 1 sind Steuervorrichtungen im Bogenanleger und im Querschneider vorgesehen, die ihrerseits von Lichtschranken im Zuge der Förderbahn von den Vorder- und Hinterkanten der Bögen gesteuert werden und über Zeitglieder die Förderantriebe des Bogenanlegers und des Querschneiders ein- und ausschalten.

Hierbei müssen folgende Funktionen gewährleistet sein:

– Die Förderweite vom Bogenanleger zur Kaschiervorrichtung. Jeder Bogen soll nur so weit gefördert werden, dass seine Vorderkante gerade von den Walzen der Kaschiervorrichtung erfasst werden kann. Bei der höheren Fördergeschwindigkeit des Bogenanlegers gegenüber der Kaschiervorrichtung wäre ein weiteres Fördern schädlich, da die Bögen zusammengeschoben und zerknittert würden.

– Die Bögen sollen in die Kaschierfolien unter festgelegten gegenseitigen Abständen eingebracht werden. Die Steuervorrichtung im Bogenanleger soll für die Einstellung dieser Abstände auf einen beliebigen Wert sowie seine Einhaltung eingerichtet sein.

– Im Querschneider muss dafür gesorgt werden, dass die Querschnitte entweder möglichst genau an den Rändern der kaschierten Bögen durchgeführt werden oder unter einem vorgegebenen Abstand von diesen Rändern. Dies muss sowohl bei den Vorderkanten wie auch bei den Hinterkanten der Bögen gewährleistet sein.

Durch die Erfindung nach Anspruch 1 wird eine Einrichtung geschaffen, die diese Funktionen ausführt.

Nach Merkmal d von Anspruch 1 werden die Bögen vereinzelt und einer nach dem anderen in eine Warteposition gebracht.

Nach Merkmal e wird dann, wenn ein Bogen von der Kaschiervorrichtung abgezogen ist, ein weiterer Bogen in die Warteposition gebracht, jedoch erst nach einer bestimmten Zeit. Hierdurch wird vermieden, dass Bögen aneinanderstossen oder sich überlappen.

Nach den Merkmalen f bis i werden bestimmte Zwischenräume zwischen den in die Kaschierfolien einzubringenden Bögen eingehalten.

Nach den Merkmalen j bis l wird erreicht, dass im Querschneider der Förderantrieb dann stillgesetzt ist, wenn die die Bögen enthaltende Kaschierfolienbahn eine Querschneidposition erreicht hat.

Eine Vorrichtung zum Beschneiden der in Förderrichtung verlaufenden Bogenränder kann ausserdem vorgesehen sein. Sie arbeitet kontinuierlich und lässt sich problemlos der Kaschiervorrichtung nachschalten.

Aus der US-A-4 214 936 ist es an sich bekannt, bei einer ähnlichen Vorrichtung Lichtschranken und nachgeschaltete Zeitverzögerer zur Steuerung des Antriebs von Kaschierwalzen vorzusehen.

Aus der US-A-3 169 432 ist für sich die Steuerung einer Schneidvorrichtung über eine Lichtschranke bekannt, die auf die Vorderkante eines blattförmigen, aus einem zusammenhängenden Streifen auszuschneidenden Objekts anspricht.

Nach Anspruch 2 lässt sich vom Querschneider ein Signal zum Einschalten des Förderantriebs gewinnen, das nach Beendigung eines Querschnittes abgegeben wird.

Nach Anspruch 3 können für Vorder- und Hinterkante jedes Bogens unterschiedliche Nachlaufzeiten des Förderantriebes eingestellt werden.

Nach Anspruch 4 lässt sich ein schnell stillsetzbarer Förderantrieb schaffen.

Nach Anspruch 5 kann der Querschneider mit einem Kreismesser ausgerüstet werden, wobei weitere Lichtschranken in Verbindung mit dem Kreismesser die Steuerung des Querschneiders beeinflussen.

Die Erfindung wird mit weiteren Einzelheiten anhand von Zeichnungen und Funktionsschemata näher erläutert.

Figur 1 ist eine perspektivische Ansicht der Gesamteinrichtung.

Figur 2 ist ein schematisierter Querschnitt durch die Gesamteinrichtung.

Figur 3 ist ein schematisierter Querschnitt durch den Bogenanleger.

Figur 4 ist ein schematisierter Querschnitt durch eine Vorrichtung zum Längs- und Querschneiden.

Funktionsschema des Bogenanlegers Seite 11. Funktionsschema des Querschneiders Seite 12.

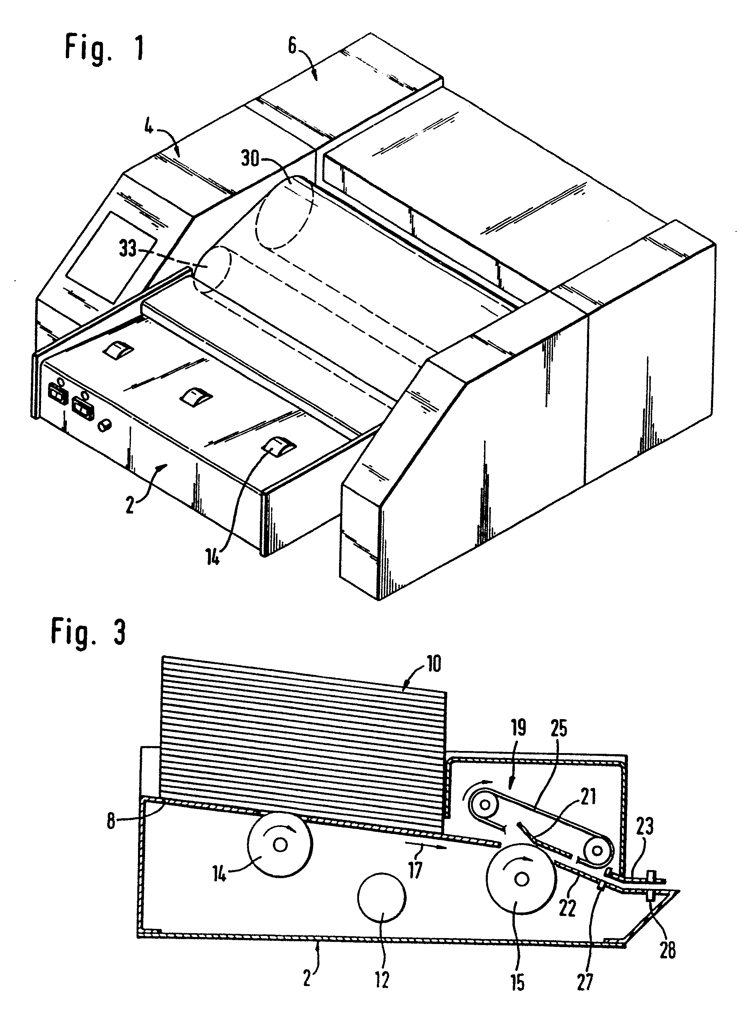

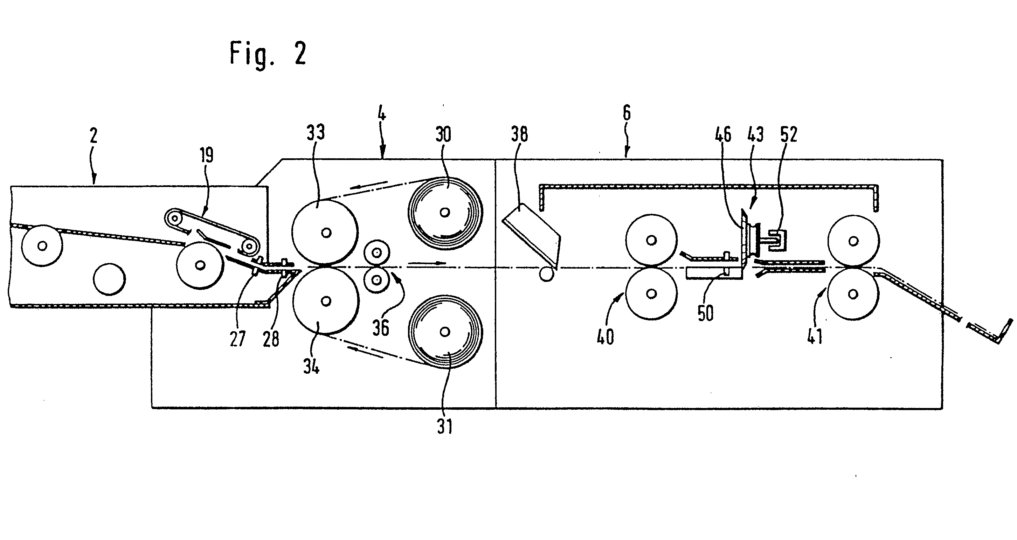

In Figur 1 und 2 sind der Bogenanleger mit 2, die Kaschiervorrichtung mit 4 und die Vorrichtung zum Längs- und Querschneiden mit 6 bezeichnet. Die drei Einzelvorrichtungen sind im Betrieb fest miteinander verbunden.

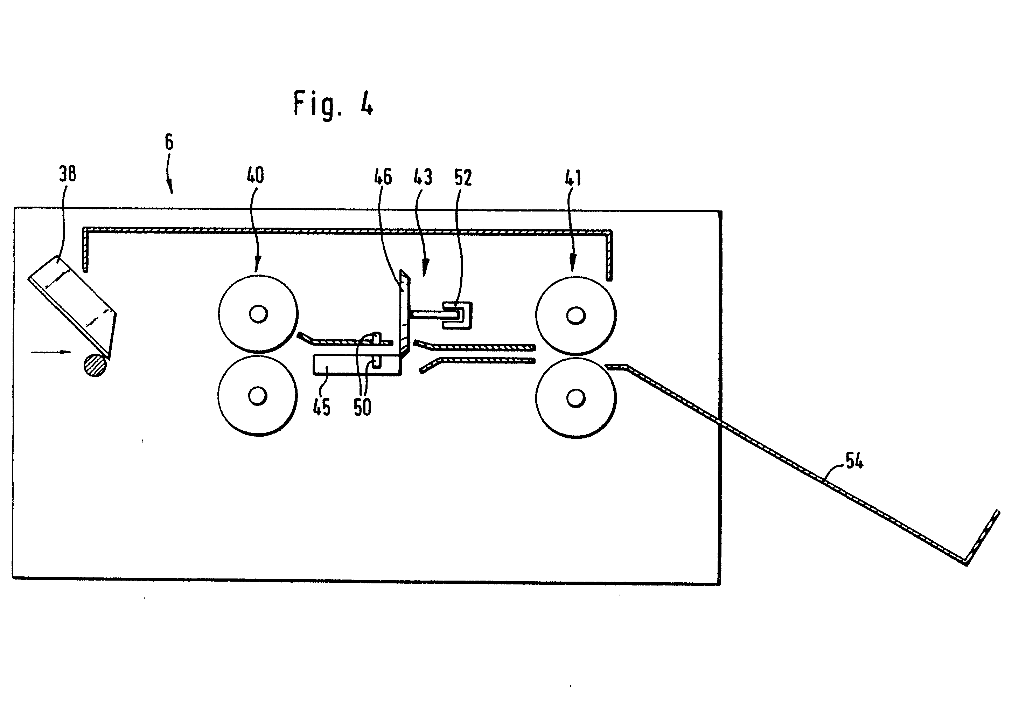

Figur 3 zeigt den Bogenanleger 2 im einzelnen. Er hat ein Gleitblech 8, auf dem ein Stapel 10 der zu kaschierenden Bögen ruht. Von einem Gleichstrommotor 12 werden durch nichtdargestellte Mittel Vorschubrollen 14 und 15 angetrieben. Die Lage der Vorschubrollen 14 zeigt auch Figur 1. Die eingezeichneten Pfeile bezeichnen die Drehrichtung der Vorschubrollen, Pfeil 17 die Förderrichtung.

Am Ende des Gleitbleches 8 ist eine als Ganzes mit 19 bezeichnete Schleuse vorgesehen. Sie dient zum Vereinzeln der dem Stapel 10 entnommenen Bögen. Sie hat Führungsbleche 21, 22, 23 und einen Riementrieb 25. Dieser ist mit Riemen aus einem Material versehen, das an den Bögen gut haftet. Der Riementrieb 25 wird gegenläufig zu den Vorschubrollen 15 angetrieben. Er sorgt dafür, dass oberhalb eines zu fördernden Bogens alle weiteren Bögen zurückgeschoben werden.

Etwa in der Mitte der Bahnbreite sind am Ende der Schleuse eine 1. Lichtschranke 27 und in Förderrichtung dahinter eine 2. Lichtschranke 28 angeordnet. Die Lichtstrahlen durchqueren die Förderbahn und werden von den geförderten Bögen unterbrochen.

Die Kaschiervorrichtung (Fig. 1 und 2) hat zwei Vorratsrollen 30 und 31 für selbstklebende Kaschierfolie. Übereinander angeordnete und gegeneinander gedrückte Kaschierwalzen 33, 34 ziehen je eine Folienbahn von den beiden Vorratsrollen 30, 31 ab und drücken sie beiderseits gegen Bögen, die den Kaschierwalzen vom Bogenanleger 2 zugeführt werden. Die Folienbahn mit eingeschlossenen Bögen läuft anschliessend durch ein Walzenpaar 36 und wird dann der Vorrichtung 6 zum Längs- und Querschneiden zugeführt.

Diese Vorrichtung (vgl. Figur 4) hat einen Längsschneider 38 bekannter Art, der die in Förderrichtung verlaufenden Kanten beschneidet. Es folgen ein vorderes Förderwalzenpaar 40 und ein hinteres Förderwalzenpaar 41. Beide Walzenpaare werden von einem nichtdargestellten Gleichstrommotor (Spaltpolmotor) über eine Elektromagnetkupplung angetrieben und lassen sich durch eine elektromagnetische Bremse stillsetzen. Das vordere Förderwalzenpaar 40 hat eine um etwa 5% höhere Umfangsgeschwindigkeit als die Kaschierwalzen 33, 34. Während des Schneidevorgangs hängt die Folienbahn nämlich etwas als Vorratsschleife durch. Sie wird anschliessend mit höherer Geschwindigkeit abtransportiert. Das hintere Förderwalzenpaar hat eine um etwa 3% höhere Umfangsgeschwindigkeit als das vordere, wodurch die Folienbahn bis zum Schnitt gespannt gehalten wird.

Zwischen beiden Walzenpaaren ist der Querschneider 43 angeordnet. Er hat eine quer über die Bahn verlaufende Schneidvorrichtung. Diese kann nach Art einer Schere ausgebildet sein. Vorzugsweise hat sie jedoch einen Messerbalken 45 und ein an ihm entlangzubewegendes Kreismesser 46. Das Kreismesser wird durch einen Kettenzug von einem umpolbaren Gleichstrommotor angetrieben. Ausserdem ist ein Antrieb für die Drehbewegung des Kreismessers vorgesehen.

Eine innerhalb der Bahn angeordnete 3. Lichtschranke 50 steuert den Förderantrieb des Querschneiders.

Beiderseits ausserhalb der Ränder der Folienbahn sind zwei Gabellichtschranken 52 angeordnet. Sie fungieren als Endschalter für das Kreismesser 46, sprechen auf einen von diesem mitgeführten Teil, z. B. seine Achse oder seine Welle an und dienen dazu, den Messerlauf abzuschalten und die Drehrichtung des Querförderantriebs für das Messer für den nächsten Messerlauf umzupolen. An das hintere Förderwalzenpaar schliesst sich eine Ablage 54 für die herausgeschnittenen Bögen an.

Einzelheiten der Steuervorrichtungen des Bogenanlegers und des Querschneiders werden am besten anhand der Funktion beschrieben. Funktionsschemata finden sich auf Seite 11 und 12. Hierbei wird vorausgesetzt, dass die Einrichtung bereits in Betrieb ist.

Ein von den Kaschierwalzen 33, 34 gerade eingezogener Bogen gibt mit seiner Hinterkante zunächst die 1. Lichtschranke 27 frei. Hierdurch wird ein 1. Zeitglied eingeschaltet. Nach Ablauf seiner Verzögerungszeit wird der Antrieb des Bogenanlegers eingeschaltet. Hierdurch wird ein verzeinzelter Bogen so weit vorgeschoben, dass er mit seiner Vorderkante die 1. Lichtschranke 27 unterbricht. Hierdurch wird der Antriebsmotor 12 ausgeschaltet, so dass der Bogen mit seiner Vorderkante kurz hinter der Lichtschranke 27 zur Ruhe kommt, dort also eine Warteposition einnimmt. Die Verzögerung durch das 1. Zeitglied soll verhindern, dass der in Warteposition vorgeschobene Bogen mit seiner Vorderkante an die Hinterkante des vorangehenden Bogens stösst oder ihn überlappt.

Der von den Kaschierwalzen 33, 34 eingezogene Bogen gibt schliesslich mit seiner Hinterkante die 2. Lichtschranke 28 frei. Hierdurch wird ein 2. Zeitglied eingeschaltet, dessen Verzögerungszeit auf den gewünschten Zwischenraum zwischen zwei aufeinanderfolgenden Bögen eingestellt ist. Nach Ablauf der Verzögerungszeit wird der Antrieb eingeschaltet. Der Antrieb fördert den in Warteposition befindlichen Bogen gegen die Kaschiervorrichtung. Dieser Bogen unterbricht die 2. Lichtschranke, und diese schaltet das 1. Zeitglied ein. Die Verzögerungszeit des 1. Zeitgliedes entspricht der Förderstrecke aus dem Bogenanleger gegen die Kaschierwalzen 33, 34. Nach Ablauf dieser Zeit wird der Antrieb ausgeschaltet. Dieser Bogen wird nun von den Kaschierwalzen erfasst und weiterbefördert.

Das 1. Zeitglied dient zwei verschiedenen Aufgaben. Seine Verzögerungszeit wird so eingestellt, dass der Antrieb nach Erreichen einer bestimmten Vorschubweite gegen die Kaschierwalzen abgeschaltet wird. Ausserdem verhindert es, dass ein in Warteposition nachgeschobener Bogen mit seiner Vorderkante gegen die Hinterkante eines von den Kaschierwalzen gerade eingezogenen Bogens stösst. Die hierfür erforderliche Verzögerungszeit ist unkritisch, kann also die gleiche sein wie die der Vorschubweite entsprechende Verzögerungszeit, so dass man mit einem einzigen Zeitglied für beide Aufgaben auskommt.

Die Zwischenräume zwischen den Bögen sorgen in Verbindung mit den beiden Lichtschranken und der Steuervorrichtung für eine selbsttätige Steuerung des Bogenanlegers, so dass keine externen Start- oder Stopsignale erforderlich sind.

Zu Beginn der Arbeit des Bogenanlegers wird noch kein Bogen in die Kaschiervorrichtung eingezogen. Infolgedessen sind sowohl die 1. wie auch die 2. Lichtschranke frei. Der zuerst zugeführte Bogen bleibt daher nicht in Warteposition stehen, da ja die 2. Lichtschranke frei ist, sondern läuft weiter gegen die Kaschiervorrichtung. Die 2. Lichtschranke schaltet aber nach Unterbrechung das 1. Zeitglied ein, das den Antrieb nach Erreichen der erwünschten Vorschubweite gegen die Kaschierwalzen unterbricht.

Das Funktionsschema des Querschneiders findet sich auf Seite 12. Die 3. Lichtschranke 50 wird entweder durch die Vorderkante eines Bogens unterbrochen oder durch seine Hinterkante freigegeben. Wird sie unterbrochen, wird ein Zeitglied 3v eingeschaltet, wird sie freigegeben, so wird ein Zeitglied 3h eingeschaltet. Beide sind im allgemeinen auf unterschiedliche Zeiten eingestellt, entsprechend dem Weg, den die Folienbahn von der Lichtschranke bis zur Schnittstelle zurücklegt. Nach Ablauf der Verzögerungszeit schaltet das vorher eingeschaltete Zeitglied 3h oder 3v eine im Zuge des Bahnantriebes vorgesehene Kupplung aus und eine elektromagnetische Bremse zum schnellen Stillsetzen ein. Ausserdem wird ein Messerantrieb eingeschaltet, der dafür sorgt, dass das Kreismesser 46 entlang dem Messerbalken 45 quer über die nun ruhende Folienbahn befördert wird und die Folie abschneidet. Am Ende der Messerbewegung wird eine von zwei Gabellichtschranken 52 unterbrochen. Hierdurch wird der Messerantrieb ausgeschaltet und der zugehörige Antriebsmotor für die nächste Messerbewegung, die in entgegengesetzter Richtung verlaufen muss, umgepolt, aber noch nicht eingeschaltet. Ausserdem wird die elektromagnetische Bremse des Förderantriebs der Folienbahn ausgeschaltet und die Kupplung dieses Förderantriebs eingeschaltet, so dass die Folienbahn weiter vorbewegt wird. Sobald die nächste Bogenkante die 3. Lichtschranke 50 erreicht, wiederholt sich dieser Ablauf.

Elektronische Schaltungen im einzelnen wurden nicht angegeben, da die hier zu verwendende Elektronik an sich bekannt ist und das hier Wesentliche u.a. in bestimmten Funktionsabläufen liegt, die mit sehr verschiedenartigen elektronischen Bauteilen erzielt werden können.

### Funktionsschema des Bogenanlegers

1. Lichtschranke 27

wird unterbrochen     wird freigegeben

↓           1. Zeitglied ein.
Nach Verzögerungszeit

↓           ↓

Antrieb aus           Antrieb ein

2. Lichtschranke 28

wird unterbrochen       wird freigegeben

1. Zeitglied ein       2. Zeitglied ein

Nach Verzögerungszeit     Nach Verzögerungszeit
( = Vorschubweite)        ( = Bogenzwischenraum)

Antrieb aus           Antrieb ein

Funktionsschemata des Querschneiders

3. Lichtschranke 50

wird unterbrochen | wird freigegeben

Zeitglied 3v ein
Nach Verzögerungszeit
( = Vorschub einer Vorderkante in Schneidposition)

Zeitglied 3h ein
Nach Verzögerungszeit
( = Vorschub einer Hinterkante in Schneidposition)

Kupplung des Förderantriebs von 6 aus
Bremse ein
Messerantrieb ein

Eine der Gabellichtschranken 52

(gleiche Funktion für beide)

wird unterbrochen

Bremse aus
Kupplung ein
Messerantrieb wird ausgeschaltet
und umgepolt
(bleibt ausgeschaltet)

Bezugszeichen

| 2 | Bogenanleger |
| 4 | Kaschiervorrichtung |
| 6 | Längs- und Querschneidvorrichtung |
| 8 | Gleitblech |
| 10 | Stapel |
| 12 | Gleichstrommotor |
| 14, 15 | Vorschubrolle |
| 17 | Pfeil |
| 19 | Schleuse |
| 21, 22, 23 | Führungsblech |
| 25 | Riementrieb |
| 27 | 1. Lichtschranke |
| 28 | 2. Lichtschranke |
| 30, 31 | Vorratsrolle |
| 33, 34 | Kaschierwalze |
| 36 | Walzenpaar |
| 38 | Längsschneider |
| 40 | vorderes Förderwalzenpaar |
| 41 | hinteres Förderwalzenpaar |
| 43 | Querschneider |
| 45 | Messerbalken |
| 46 | Kreismesser |
| 50 | 3. Lichtschranke |
| 52 | Gabel-Lichtschranke |
| 54 | Ablage |

**Patentansprüche**

1. Einrichtung zum Kaschieren von Bögen aus Papier, Karton oder Pappe mit Kunststoff-Folie, mit

a) einer kontinuierlich arbeitenden Kaschiervorrichtung (4), der eine Vorrichtung (Bogenanleger 2) zum Zuführen einzelner Bögen vorgeschaltet und eine intermittierend arbeitende Vorrichtung (Querschneider 43) zum Zerschneiden der Kaschierfolie quer zur Förderrichtung der Kaschiervorrichtung nachgeschaltet sind, wobei

b) der Bogenanleger (2) eine Vorrichtung (Vereinzeler) zum Vereinzeln von Bögen aus einem Stapel (10) aufweist, gekennzeichnet durch folgende Merkmale:

c) der intermittierend arbeitende Bogenanleger (2) und der Querschneider (43) haben je einen ein- und ausschaltbaren Förderantrieb;

d) am Ausgang des Vereinzelers (Schleuse 19) ist eine erste Lichtschranke (27) angeordnet, die bei Unterbrechung durch die Vorderkante eines Bogens den Förderantrieb des Bogenanlegers abschaltet und nach Freigabe durch die Hinterkante eines durch die Kaschiervorrichtung (4) weiterbeförderten Bogens den Förderantrieb des Bogenanlegers (2) einschaltet;

e) der ersten Lichtschranke (27) ist ein erstes Zeitglied nachgeschaltet, das von der ersten Lichtschranke (27) bei deren Freigabe eingeschaltet wird, einen Ausgang zum Unterbrechen des Förderantriebes hat und dessen Verzögerungszeit der Förderweite gegen die Kaschiervorrichtung entspricht;

f) das erste Zeitglied gibt nach Ablauf seiner Verzögerungszeit ein Ausgangssignal zum Einschalten des Förderantriebes des Bogenanlegers (2) ab;

g) in Förderrichtung hinter der ersten Lichtschranke (27) ist eine zweite Lichtschranke (28) angeordnet, der ein zweites Zeitglied nachgeschaltet ist, das von der zweiten Lichtschranke bei ihrer Freigabe eingeschaltet wird;

h) das zweite Zeitglied hat einen Ausgang zum Starten des Förderantriebes des Bogenanlegers, und seine Verzögerungszeit ist einstellbar auf den erwünschten Zwischenraum zwischen aufeinanderfolgenden Bögen;

i) der zweiten Lichtschranke (28) ist auch das erste Zeitglied nachgeschaltet, das von der zweiten Lichtschranke bei ihrer Unterbrechung eingeschaltet wird;

j) im Querschneider (43) ist eine dritte Lichtschranke (50) angeordnet, der ein drittes Zeitglied nachgeschaltet ist;

k) die Verzögerungszeit des dritten Zeitgliedes entspricht dem Förderweg einer Bogenkante von der dritten Lichtschranke zu der dieser Bogenkante entsprechenden erwünschten Schneidposition;

l) das dritte Zeitglied gibt ein Ausgangssignal zum Abschalten des Förderantriebes und zum Einschalten des Messerantriebes ab.

2. Einrichtung nach Anspruch 1, dadurch gekennzeichnet, dass der Querschneider (43) eine Steuervorrichtung (Querschneidsteuerung) hat, die nach Beendigung eines Querschnittes ein Signal zum Einschalten des Förderantriebes abgibt.

3. Einrichtung nach Anspruch 1 oder 2, gekennzeichnet durch folgende Merkmale:

a) Der dritten Lichtschranke (50) sind zwei Zeitglieder nachgeschaltet, deren eines beim Unterbrechen und deren anderes beim Freigeben durch einen Bogen ein Startsignal erhält;

b) die beiden Zeitglieder sind auf unterschiedliche Verzögerungszeiten einstellbar.

4. Einrichtung nach einem der Ansprüche 1 bis 3, gekennzeichnet durch folgende Merkmale:

a) Zum Ein- und Ausschalten des Förderantriebs des Querschneiders (43) ist eine Schaltkupplung vorgesehen, und zum schnellen Stillsetzen eine elektromagnetische Bremse;

b) beide sind durch Ausgangssignale des dritten Zeitgliedes oder der beiden an seiner Stelle angeordneten Zeitglieder und die Steuervorrichtung des Messerantriebes betätigbar.

5. Einrichtung nach einem der Ansprüche 1 bis 4, gekennzeichnet durch folgende Merkmale:

a) Der Querschneider (43) hat einen quer zur Förderrichtung angeordneten Messerbalken (45) und ein Kreismesser (46);

b) zum Drehen des Kreismessers und zu seiner Bewegung entlang des Messerbalkens dient ein Messerantrieb mit Gleichstrommotor und Umpoleinrichtung;

c) in den Endlagen des Kreismessers beiderseits der Folienbahn ist je eine Lichtschranke (52) angeordnet, deren Ausgänge mit der Steuerung des Messerantriebes verbunden sind;

d) auf ein Signal einer dieser Lichtschranken schaltet diese Steuerung den Messerantrieb aus und polt die Stromzufuhr um ohne einzuschalten.

**Claims**

1. Apparatus for laminating sheets of paper, card or board with plastic film, with

a) a continuously working laminating device (4), a device (sheet feeder 2) for feeding individual sheets, disposed upstream of the laminating device (4), and an intermittently working device (cross cutter 43) for cutting the laminating film transversely to the conveying direction of the laminating device, disposed downstream thereof, wherein

b) the sheet feeder (2) includes a device (separator) for separating sheets from a stack (10), characterized by the following features:

c) the intermittently working sheet feeder (2) and the cross cutter (43) each have a conveying drive, which can be switched on and off;

d) at the outlet of the separator (transfer chamber 19), a first photoelectric barrier (27) is provided which, when broken by the leading edge of a sheet, switches off the conveying drive of the sheet feeder and, when cleared by the trailing edge of a sheet which has been transported forward through the laminating device (4), switches on the conveying drive of the sheet feeder (2);

e) downstream of the first photoelectric barrier (27) there is disposed a first timing element which is switched on by the first photoelectric barrier when the latter is cleared, and which has an exit for interrupting the conveying drive and whose delay time corresponds to the conveying length against the laminating device;

f) after lapse of its delay time the first timing element emits an output signal for switching in the conveying drive of the sheet feeder (2);

g) downstream of the first photoelectric barrier (27) there is disposed a second photoelectric barrier (28) which is associated with a second timing element which is switched on by the second photoelectric barrier when the latter is cleared;

h) the second timing element has an output for starting the conveying drive of the sheet feeder, and its delay time is adjustable to the desired spacing between successive sheets;

i) the second photoelectric barrier (28) is also associated with the first timing element which is switched on by the second photoelectric barrier when the latter is broken;

j) a third photoelectric barrier (50) associated with a third timing element is provided in the cross cutter (43);

k) the delay time of the third timing element corresponds to the conveying travel of a sheet edge from the third photoelectric barrier to the desired cutting position corresponding to this sheet edge;

l) the third timing element emits an output signal for switching off the conveying drive and switching on the cutter drive.

2. Apparatus according to claim 1, characterized in that the cross cutter (43) has a control device (cross-cutting control) which, after completion of a cross cut, emits a signal for switching on the conveying drive.

3. Apparatus according to claims 1 or 2, characterized by the following features:

a) The third photoelectric barrier (50) is associated with two timing elements, one of which receives a starting signal when the photoelectric barrier is broken by a sheet, and the other receives a starting signal when the photoelectric barrier is cleared by a sheet;

b) the two timing elements are adjustable to different delay times.

4. Apparatus according to any of claims 1 to 3, characterized by the following features:

a) a clutch is provided for switching the conveying drive of the cross cutter (43) on and off, and an electromagnetic brake is provided for rapid stopping;

b) both these can be actuated by output signals of the third timing element, or of the two timing elements provided in its place, and by the control device of the cutter drive.

5. Apparatus according to any of claims 1 to 4, characterized by the following features:

a) The cross cutter (43) has a cutter bar (45) arranged across the conveying direction, and a circular blade (46);

b) for rotating the circular blade and moving it along the cutter bar, a cutter drive with a direct current motor and a commutating device is used;

c) a photoelectric barrier (52) each is provided in the end positions of the circular blade on either side of the film web, the exits of the photoelectric barriers (62) being connected to the cutter drive control;

d) upon a signal of one of these photoelectric barriers, this control switches off the cutter drive and commutates the current supply without switching on.

## Revendications

1. Appareil pour doubler des feuilles de papier, de carton mince ou de carton épais avec de la pellicule de matière synthétique, comportant

a) un dispositif de doublage fonctionnant de façon continue (4) avant lequel est branché un dispositif (présentateur de feuilles 2) pour l'amenée de feuilles individuelles et après lequel est branché un dispositif fonctionnant par intermittence (découpeur transversal 43) pour le découpage de la pellicule de doublage transversalement à la direction de transport du disposition de doublage,

b) le présentateur de feuilles (2) présentant un dispositif (séparateur) pour séparer des feuilles d'une pile (10), caractérisé par les particularités suivantes:

c) le présentateur de feuilles (2) fonctionnant par intermittence et le découpeur transversal (43) ont chacun un entraînement de transport pouvant être mis en action et hors d'action;

d) à la sortie du séparateur (sas 19) est disposée une première barrière photoélectrique (27) qui, lorsqu'elle est interrompue par le bord antérieur d'une feuille, met hors d'action l'entraînement de transport du présentateur de feuilles, et, après libération par le bord postérieur d'une feuille acheminée par le dispositif de doublage (4), met en action l'entraînement de transport du présentateur de feuilles (2);

e) après la première barrière photoélectrique (27) est branché un premier organe de temps qui est mis en action par la première barrière photoélectrique (27) lors de la libération, a une sortie pour interrompre l'entraînement de transport, et dont le temps de retard correspond à la distance de transport vers le dispositif de doublage;

f) le premier organe de temps, après écoulement de son temps de retard, émet un signal de sortie pour mettre en action l'entraînement de transport du présentateur de feuilles (2);

g) derrière la première barrière photoélectrique (27), dans le sens de transport, est disposée une deuxième barrière photoélectrique (28) après laquelle est branché un deuxième organe de temps qui est mis en action par la deuxième barrière photoélectrique lors de sa libération:

h) le deuxième organe de temps a une sortie pour le démarrage de l'entraînement de transport du présentateur de feuilles et son temps de retard est réglable en fonction de l'espacement désiré entre feuilles successives;

i) après la deuxième barrière photoélectrique (28) est aussi branché le premier organe de temps qui est mis en action par la deuxième barrière photoélectrique lors de son interruption;

j) dans le découpeur transversal (43) est disposée une troisième barrière photoélectrique (50) après laquelle est branché un troisième organe de temps;

k) le temps de retard du troisième organe de temps correspond à la course de transport d'un bord de feuille, de la troisième barrière photoélectrique à la position de coupe désirée, correspondant à ce bord de feuille:

l) le troisième organe de temps émet un signal de sortie pour mettre hors d'action l'entraînement de transport et pour mettre en action l'entraînement de couteau.

2. Appareil selon la revendication 1, caractérisé en ce que le découpeur transversal (43) a un dispositif de commande (commande de découpage transversal) qui, après la fin d'un découpage transversal, émet un signal pour mettre en action l'entraînement de transport.

3. Appareil selon l'une des revendications 1 et 2, caractérisé par les particularités suivantes:

a) après la troisième barrière photoélectrique (50) sont branchés deux organes de temps dont l'un reçoit un signal de démarrage lors de l'interruption et l'autre lors de la libération par une feuille;

b) les deux organes de temps sont réglables à des temps de retard différents.

4. Appareil selon l'une des revendications 1 à 3, caractérisé par les particularités suivantes:

a) pour la mise en action et hors d'action de l'entraînement de transport du découpeur transversal (43) est prévu un embrayage et pour l'arrêt rapide, un frein électromagnétique;

b) tous deux peuvent être actionnés par des signaux de sortie du troisième organe de temps ou des deux organes de temps disposés â sa place et par le dispositif de commande de l'entraînement de couteau.

5. Appareil selon l'une des revendications 1 à 4, caractérisé par les particularités suivantes:

a) le découpeur transversal (43) présente une barre de couteau (45) disposée transversalement à la direction de transport et un couteau circulaire (46);

b) la rotation du couteau circulaire et son mouvement le long de la barre de couteau sont assurés par un entraînement de couteau avec moteur à courant continu et dispositif d'inversion de pôles;

c) dans chacune des positions extrêmes du couteau circulaire, de part et d'autre de la bande de pellicule, est disposée une barrière photoélectrique (52) dont les sorties sont reliées à la commande de l'entraînement de couteau;

d) sur un signal de l'une de ces barrières photoélectriques, cette commande met hors d'action la commande de l'entraînement de couteau et inverse les pôles de l'amenée de courant sans mettre en action.

0 093 385

Fig. 1

Fig. 3

9

Fig. 2

# Fig. 4